# EUROPÄISCHE PATENTSCHRIFT

(11) **EP 0 534 079 B1**
(45) Veröffentlichungstag und Bekanntmachung des Hinweises auf die Patenterteilung: **06.03.1996**
(21) Anmeldenummer: 92112490.5
(22) Anmeldetag: 21.07.1992
(51) Int. Cl.: F02M 35/024, B01D 46/00

(54) **Ansaugluftfiltereinsatz für insbesondere Kraftfahrzeuge**
Intake air filter element in particular for automotive vehicles
Elément pour filtre à air d'aspiration en particulier pour véhicules automobiles

(30) Priorität: 24.09.1991 DE 4131716
(43) Veröffentlichungstag der Anmeldung: 31.03.1993
(73) Patentinhaber: KNECHT FILTERWERKE GMBH, D-70376 Stuttgart (DE)
(72) Erfinder: Rauleder, Heinz, W-7057 Winnenden (DE); Hundhammer, Alois, W-7448 Wolfschlugen (DE)
(74) Vertreter: Patentanwalts-Partnerschaft Rotermund + Pfusch

(56) Entgegenhaltungen:
- DE-A- 3 708 756
- US-A- 4 929 263

## Beschreibung

Die Erfindung betrifft einen plattenförmigen Filtereinsatz für ein Ansaugfilter für insbesondere Kraftfahrezuge nach dem Oberbegriff des Patentanspruchs 1.
Ein solcher Filtereinsatz ist aus DE 37 08 756 A bekannt.

Die Erfindung beschäftigt sich mit dem Problem, einen solchen Filtereinsatz baulich einfacher zu gestalten.

Gelöst wird dieses Problem durch eine Ausbildung eines solchen Filtereinsatzes nach den kennzeichnenden Merkmalen des Patentanspruchs 1.

Zweckmäßige Ausgestaltungen sind Gegenstand der Ansprüche.

Ein Ausführungsbeispiel, anhand dessen die Wirkung und Vorteile der Erfindung noch näher erläutert werden, ist in der Zeichnung dargestellt.

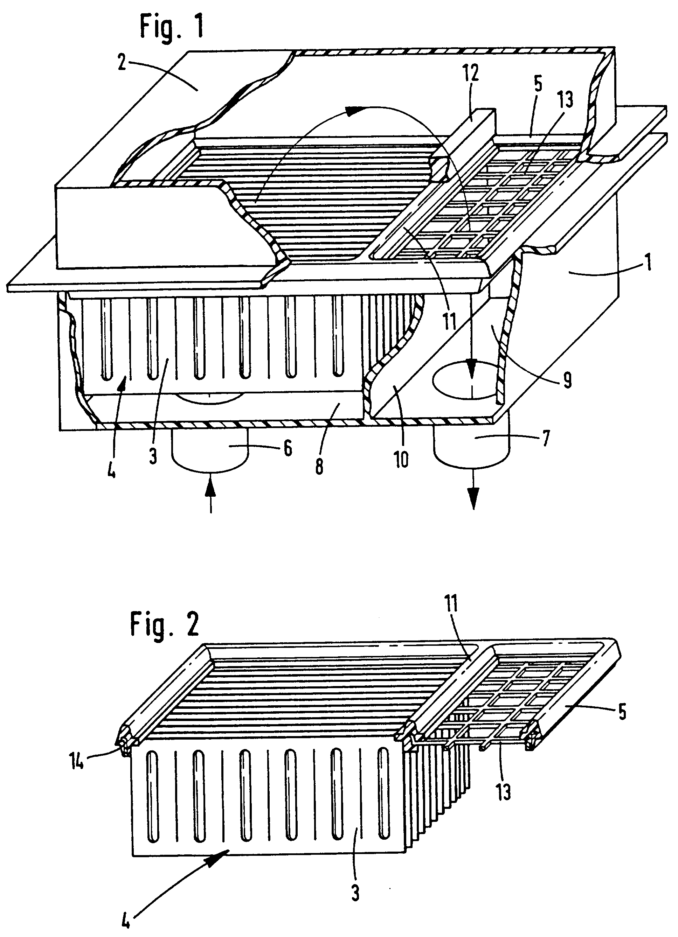

Es zeigen
- Fig. 1: die perspektivische Darstellung eines in ein angedeutetes Gehäuse eingebauten Filtereinsatzes,
- Fig. 2: einen Längsschnitt durch den Filtereinsatz

In ein aus einem ersten Teil 1 und einem zweiten Teil 2 bestehendes teilbares Gehäuse ist ein Filtereinsatz 4 eingesetzt. Das Filtermaterial 3 dieses Einsatzes ist ein zick-zack-förmig gefaltetes Papier. Eingefaßt ist der Filtereinsatz 4 von einer umlaufenden Dichtung 5, die zur Abdichtung der beiden Gehäuseteile 1 und 2 dient. In der von der umlaufenden Dichtung 5 erfassten Fläche nimmt das Filtermaterial nur einen Teilbereich ein, während der übrige Bereich frei bleibt. Zwischen dem von dem Filtermaterial 3 eingenommen und dem freibleibenden Bereich ist fest und dicht mit dem Filtermaterial verbunden eine Zusatz-Dichtung 11 vorgesehen. Mit der Zusatz-Dichtung 11 liegt der Filtereinsatz in dem ersten Gehäuseteil 1 dicht an einer das Innere des Gehäuseteiles 1 in zwei getrennte Räume aufteilenden Wand 10 an.

Einer dieser beiden von der Trennwand 10 geschaffenen Räume ist der Rohraum 8 des Filters und der andere der in der ersten Gehäusehälfte 1 liegende Bereich des Reinraumes 9. Die in dem Filter zu reinigende Luft gelangt über einen Rohluftstutzen 6 in den Rohraum 8, von dem aus sie das Filtermaterial in das Innere des Gehäuseteiles 2 hinein durchströmt, um von dort durch den zwischen der Zusatzdichtung 11 und der umlaufenden Dichtung 5 liegenden Freiraum in den im ersten Gehäuseteil 1 liegenden Bereich des Reinraumes 9 zu gelangen. Von dort verläßt die gereinigte Luft das Filtergehäuse durch den Reinluftstutzen 7.

Damit die Zusatz-Dichtung 11 dicht an der Trenn-Wand 10 anliegen kann, ist in dem zweiten Gehäuseteil 2 eine Strebe 12 vorgesehen, die die Zusatzdichtung 11 an die Trennwand 10 anpreßt.

Damit der über das Filtermaterial hinausragende Bereich der umlaufenden Dichtung 5, der zusammen mit der Zusatz-Dichtung 11 den Freiraum umgibt, für einen sicheren und praktischen Einbau des Filtereinsatzes ausreichend versteift ist, ist der Freiraum mit einem in die genannten Dichtungen fest eingreifenden Gitter 13 ausgefüllt. Darüber hinaus ist die umlaufende Dichtung 5 noch mit einem umlaufenden Rahmen 14, der fest mit dem Gitter 13 verbunden ist, versteift.

Ein besonderer Vorteil der erfindungsgemäßen Ausführung besteht darin, daß die Zu- und Abfuhr der zu reinigenden Luft durch in dem gleichen Gehäuseteil liegende Zu- und Abführ-Stutzen erfolgen kann. Hierdurch ist in vielen Fällen ein besonders raumsparender Einbau in dem Motorraum eines Fahrzeuges möglich.

Vorteilhaft ist bei der erfindungsgemäßen Lösung weiterhin, daß mit lediglich einer an dem Filtereinsatz vorgesehenen Dichtung für das teilbare Filtergehäuse ausgekommen werden kann.

## Patentansprüche

1. Plattenförmiger Filtereinsatz für ein Ansaugfilter für insbesondere Kraftfahrzeuge, bei dem dieser Filtereinsatz dicht in ein in einer Ebene geteiltes Gehäuse einsetzbar ist, bei dem die Zu- und Abführung der Luft durch die gleiche Gehäusehälfte erfolgt, bei dem der Rein- und Rohluftstrom in der mit der Zu- und Abströmöffnung versehenen Gehäusehälfte gegeneinander getrennt geführt sind, und bei dem einer dieser beiden Ströme an dem Filtermaterial durch einen in der Gehäuseteilungsebene filtermaterialfreien Bereich vorbeiströmt,
**dadurch gekennzeichnet,**
daß der Filtereinsatz (4) einen durch Filtermaterial (3) ausgefüllten Bereich und einen seitlich davon angeordneten filtermaterialfreien Bereich besitzt und daß der filtermaterialfreie Bereich ausschließlich von einer Dichtung (5, 11) umschlossen ist.

2. Filtereinsatz nach Anspruch 1,
**dadurch gekennzeichnet,**
daß die den filtermaterialfreien Bereich umschließende Dichtung (5) versteift ist.

3. Filtereinsatz nach Anspruch 2,
**dadurch gekennzeichnet,**
daß die Versteifung der Dichtung (5, 11) durch ein den Freiraum überdeckendes in die Dichtung (5) eingreifendes starres Gitter (13) gebildet ist.

4. Filtereinsatz nach einem der vorhergehenden Ansprüche,
**dadurch gekennzeichnet,**
daß die das Filtermaterial (3) des Filtereinsatzes (4) umfassende Dichtung (5, 11) in demjenigen Bereich (11) der an den filtermaterialfreien Bereich angrenzt, durch eine an den nach außen geschlossenen Filtergehäuseteil (2) vorgesehene Stützeinrichtung (12) auf eine Gegenfläche der anderen Gehäusehälfte (1) aufgedrückt ist, und daß die Stützeinrichtung (12) in dem geschlossenen Filtergehäuseteil (2) umströmbar ist.

## Claims

1. Plate-shaped filter-insert for an intake air filter, in particular for motor vehicles, in which this filter insert can be inserted tightly into a housing divided in a plane, in which the supply and discharge of the air takes place through the same housing half, in which the clean and untreated airstream are guided separately in opposite directions in the housing half provided with the inlet and outlet orifice and in which one of these two streams flows past the filter material through a region which is free from filter material in the parting plane of the housing, characterized in that the filter insert (4) has a region filled with filter material (3) and a region which is free from filter material arranged to the side of it and in that the region which is free from filter material is surrounded exclusively by a seal (5, 11).

2. Filter insert according to Claim 1, characterized in that the seal (5) surrounding the region which is free from filter material is reinforced.

3. Filter insert according to Claim 2, characterized in that the reinforcement of the seal (5, 11) is formed by a rigid grating (13) covering the free space and engaging in the seal (5).

4. Filter insert according to one of the preceding claims, characterized in that the seal (5, 11) surrounding the filter material (3) of the filter insert (4) is pressed by a supporting device (12) provided on the filter housing part (2) closed from the exterior onto an opposing face of the other housing half (1) in the region (11) adjacent to the region free from filter material, and in that the air can flow round the supporting device (12) in the closed filter housing part (2).

## Revendications

1. Elément filtrant en forme de plaque pour filtre d'aspiration en particulier pour véhicules automobiles, cet élément filtrant pouvant être monté de manière étanche dans un corps divisé dans un plan, l'arrivée et le départ de l'air se faisant par la même moitié de ce corps, le courant d'air pur et le courant d'air brut étant conduits séparément l'un de l'autre dans la moitié du corps pourvue de l'orifice d'arrivée et de l'orifice de départ, et un de ces deux courants passant le long de la matière filtrante par une zone sans matière filtrante dans le plan de division du corps, caractérisé par le fait que l'élément filtrant (4) possède une zone remplie de matière filtrante (3) et une zone sans matière filtrante située sur le côté de la précédente, et que la zone sans matière filtrante est entourée uniquement par un joint d'étanchéité (5, 11).

2. Elément filtrant selon la revendication 1, caractérisé par le fait que le joint d'étanchéité (5) entourant la zone sans matière filtrante est raidi.

3. Elément filtrant selon la revendication 2, caractérisé par le fait que le raidissement du joint d'étanchéité (5, 11) est formé par une grille rigide (13) qui couvre l'espace libre et s'engage dans le joint d'étanchéité (5).

4. Elément filtrant selon l'une des revendications précédentes, caractérisé par le fait que le joint (5, 11) entourant la matière filtrante (3) de l'élément filtrant (4) est, dans la zone (il) contiguë à la zone sans matière filtrante, serré par un moyen d'appui (12) prévu sur la partie (2) du corps de filtre fermée vers l'extérieur contre une surface opposée de l'autre moitié (1) du corps, et que l'air peut passer autour de ce moyen d'appui (12) dans la partie fermée (2) du corps de filtre.
